# EUROPEAN PATENT SPECIFICATION

(11) **EP 3 964 421 B1**
(45) Date of publication and mention of the grant of the patent: **18.02.2026**
(21) Application number: 21195565.3
(22) Date of filing: 08.09.2021
(51) Int. Cl.: B61L 25/02, B61L 15/00, G01P 5/16

(54) **SYSTEM AND METHOD FOR LOCALIZING A RAILWAY VEHICLE TRAVELLING ALONG A RAILWAY LINE POWERED BY A CATENARY, AND RELATED RAILWAY VEHICLE**
SYSTEM UND VERFAHREN ZUM LOKALISIEREN EINES SCHIENENFAHRZEUGS, DAS ENTLANG EINER DURCH EINE KETTENLINIE ANGETRIEBENEN EISENBAHNSTRECKE FÄHRT, UND ZUGEHÖRIGES SCHIENENFAHRZEUG
SYSTÈME ET PROCÉDÉ DE LOCALISATION D'UN VÉHICULE FERROVIAIRE LE LONG D'UNE LIGNE DE CHEMIN DE FER ALIMENTÉE PAR UNE CATÉNAIRE ET VÉHICULE FERROVIAIRE ASSOCIÉ

(30) Priority: 08.09.2020 IN 202041038779
(43) Date of publication of application: 09.03.2022
(73) Proprietor: ALSTOM Holdings, 93400 Saint-Ouen-sur-Seine (FR)
(72) Inventor: GANESAN, Muniandi, 626001 VIRUDHUNAGAR (IN); GURUSAMY, Palanikumar, 625001 MADURAI (IN); SURESH, Praveen, 390016 GORWA, VADODARA (IN)
(74) Representative: Plasseraud IP

(56) References cited:
- WO-A2-2010/115537
- DE-A1- 102007 016 841
- KR-A- 20150 054 363

## Description

The present invention relates in general to a system and a method for localizing a railway vehicle travelling along a railway line powered by a catenary, and to a related railway vehicle.

As it is known, railway transportation systems are widely and increasingly used worldwide.

Consequently, the growing number of railway vehicles has resulted in increasing the complexity and extension of available infrastructures, such as track layouts and related equipment, as well as of the related control systems that are required to safely manage networks which are more and more congestioned.

To this end, an important aspect is related to the possibility of precisely and timely localizing the position of railways vehicles during their service.

In fact, with this information is possible, for example, to determine if a train is travelling in the right direction and to correlate such information with respect to other trains servicing at the same time in close areas; in this way, it is possible to better manage the whole traffic in a monitored area, and in particular to mitigate the possibility of perturbations and failures of rail systems, and especially to reduce, if not to completely prevent, the risks of collisions.

To avoid such issues, there have been proposed and implemented different solutions, one of which foresees to exploit global positioning systems, or GPS, in order to track the position of railway vehicles travelling on a rail network.

This solution is not truly reliable and efficient in some cases, due for instance to accuracy limits which do not allow to clearly identify which track of a pair of sided tracks a train is travelling along, or due to areas not covered by satellites.

Other solutions used in mainline rail systems foresee to localize trains using balises installed along the railway track and adapted to wirelessly communicate with a railway vehicle passing over them, or to detect the presence of a train using track circuits.

However, the installation of several balises or track circuits which, for long-distance tracks could be in the order of thousands, is not fully satisfactory in terms of time, cost and maintenance aspects.

KR 2015 0054363 A discloses a train location detection system, wherein a catenary deviation measuring unit, which is installed on the roof of a train, irradiates laser light towards a catenary and detects the reflected light to measure the deviation of the catenary. A catenary deviation extraction calculation unit derives vertices from the catenary deviation data measured by the deviation measuring unit, and extracts the position of the support and information on the length of each span. A catenary support position information database of the calculation unit stores pre-generated catenary support position information and span length arrangement/configuration, or overlapping section information. A GPS receiver is mounted on the train, and a location determination calculation unit derives the train location through GPS information authorized from the GPS receiver mounted on the train. Therefore, there is substantial room and desire for further improvements in the way railway vehicles are localized when travelling along railway lines.

To this end, a main aim of the present invention is to provide a solution for a more timely and precise localization of a railway vehicle travelling along a railway line, in particular without the need of installing on the railway line additional equipment provided ad hoc for localization purposes.

Within the scope of this aim, an object of the present invention is to provide a solution which allows localizing the actual position of a railway vehicle along a railway line in a manner that substantially reduces, if not completely eliminates, the influence of external and/or operative conditions, such as darkness, the presence of snow, and the like.

Another object of the present invention is to provide a solution which allows localizing the actual position of a railway vehicle autonomously by the rail vehicle itself.

Yet a further object of the present invention is to provide a solution for the localization of a railway vehicle travelling along a railway line, which is highly reliable, relatively easy to realize and implement at competitive costs.

This aim, these objects and others which will become apparent hereinafter are achieved by a system for localizing a railway vehicle traveling on a railway line according to claim 1.

According to other peculiar aspects and possible embodiments, the system for localizing a railway vehicle traveling on a railway line according to the present invention comprises one or more of the following characteristics taken individually or in any possible combination, even partial:
- the at least one sensor comprises one or more Hall-effect sensors which are arranged each to detect the actual magnetic field around the current-conducting wire and to provide to the control and processing unit first signals indicative of the actual magnetic field detected;
- the plurality of devices comprises one or more GNSS receivers arranged to provide to the control and processing unit second signals indicative of the possible actual positioning and/or of the actual speed of the railway vehicle;
- the plurality of devices comprises at least one multi-axis gyroscope arranged to provide to the control and processing unit second signals indicative of the actual rotational or angular movements of the railway vehicle;
- the plurality of devices comprises at least one multi-axis accelerometer arranged to provide to the control and processing unit second signals indicative of the actual acceleration or deceleration of the railway vehicle;
- the system further comprises one or more databases which are installed on board of the railway vehicle and comprise data selected from the group comprising identification data related to a layout and/or parts or components of the railway line, identification data and absolute location data related to each of said catenary poles, data calculated based on one or more second signals provided by one or more of the plurality of devices;
- the control and processing unit comprises or it is associated to at least one software module which is configured at least to carry out a validation check for confirming the presence of a catenary pole detected based on the first signals received from the at least one sensor and on one or more second signals received from one or more of the plurality of devices;
- the system further comprises at least one initializing device adapted to provide to the control and processing unit third signals suitable for initializing the position of the railway vehicle while the railway vehicle is at an initial static position.

The above mentioned aims and objects of the present invention are also achieved by a method for localizing a railway vehicle traveling on a railway line according to claim 10.

The present invention also provides a railway vehicle characterized in that it comprises installed on-board, at least one localizing system according to the relevant appended claims, and as per details given in the following description.

Further characteristics and advantages will become apparent from the description of some preferred but not exclusive exemplary embodiments of a system, a method, and a related railway vehicle according to the invention, illustrated only by way of non-limitative examples with the accompanying drawings, wherein:
Figure 1 is a block diagram schematically illustrating a system for localizing a railway vehicle travelling along a railway line according to the invention;
Figure 2 is a schematic illustration of a railway vehicle with the system depicted in figure 1 installed on-board;
Figure 3 is a top view schematically showing the contact wire of a catenary disposed according to a typical a zig-zag configuration;
Figure 4 is a schematic illustration of railway vehicles at a line station while initializing their position;
Figure 5 schematically illustrates an exemplary portion of a railway line with catenary poles;
Figure 6 is a flow chart schematically illustrating a method for localizing a railway vehicle travelling along a railway line, according to the invention.

It should be noted that in the detailed description that follows, identical or similar components, either from a structural and/or functional point of view, have the same reference numerals, regardless of whether they are shown in different embodiments of the present disclosure.

It should be also noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning.

In particular, for electronic and/or software means, each of the above listed terms means and encompasses electronic circuits or parts thereof, as well as stored, embedded or running software codes and/or routines, algorithms, or complete programs, suitably designed for achieving the technical result and/or the functional performances for which such means are devised.

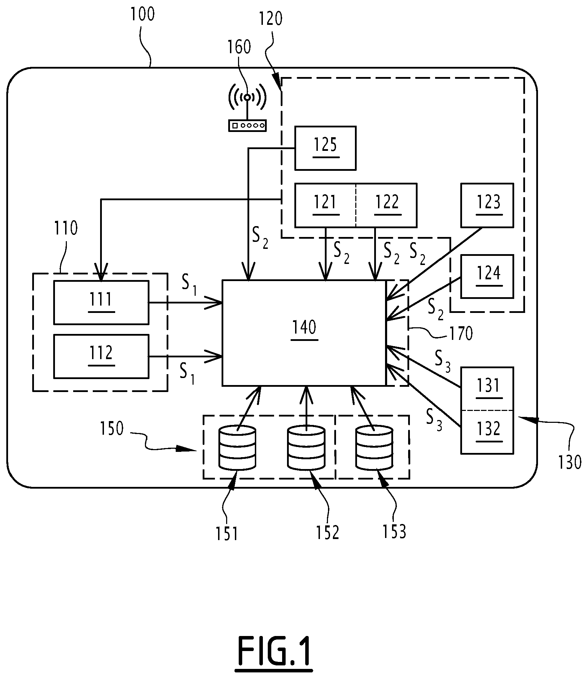

A system for localizing a railway vehicle travelling along a railway line according to the invention is schematically illustrated in figure 1 and therein indicated by the overall reference number 100, and is hereinafter referred to as the localizing system 100.

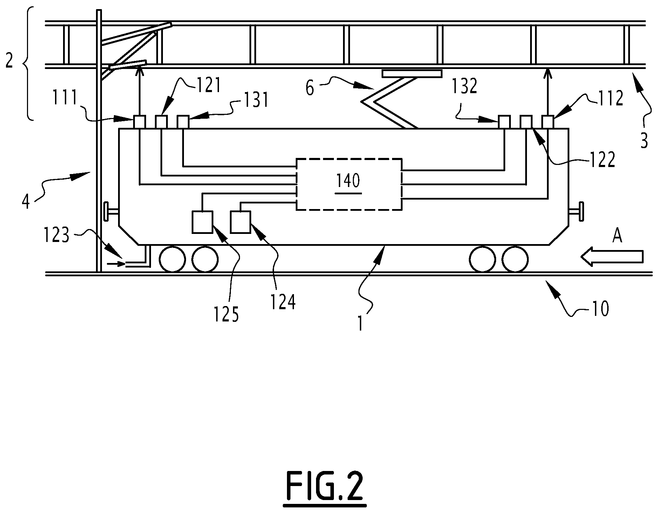

The localizing system 100 according to the invention can be used in connection with any suitable type of railway vehicle, a schematic example of which is illustrated in figure 2 in the schematic form of one locomotive 1, travelling along a railway line 10.

The railway line 10 is powered by a catenary line, schematically represented in figure 2 by the reference number 2, which comprises, according to solutions well known in the art and therefore not described herein in details, a current-conducting wire 3 supported by a plurality of catenary poles 4.

The catenary poles 4 are distributed along the railway line 10, spaced apart from each other, for example at regular intervals of 50-60 meters, and have for instance a cantilever arm supporting the current-conducting wire 3, and thus will be referred to hereinafter also as the cantilever poles 4.

As those skilled in the art would easily appreciate, the term railway vehicle herein used encompasses any suitable type of railway vehicle which can be composed by any number of locomotives or equivalent traction units, and associated one or more carriages, railcars, vehicles, or the like, that is powered by an aerial power line such as the catenary line 3.

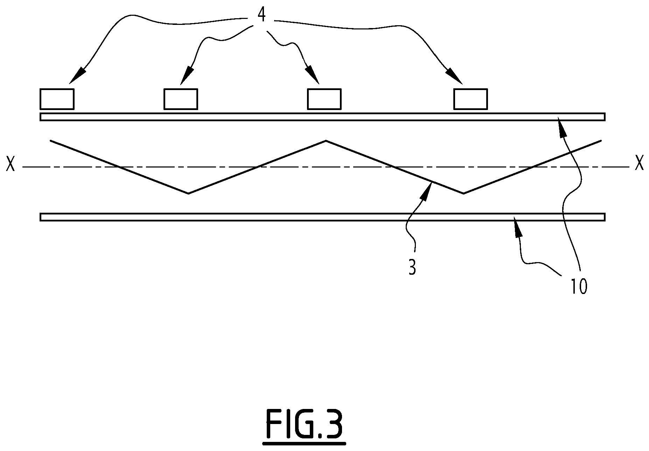

As illustrated in figure 3, the current-conducting wire 3, which is meant to get into physical contact with the pantograph 6, runs in a zig-zag path above the rails of the railway line 10 to prevent the formation of a groove in the pantograph 6. The zig-zag path - known as the 'stagger' - is generally achieved by the use of 'pull-off' arms attached to the support structures, e.g. to the catenary poles 4. The horizontal stagger is calibrated for example as the distance of+/- 250 mm from the centre of the rails, as illustrated for example in figure 3 where the centreline is represented by the axis X.

The localizing system 100 according to the invention comprises a control and processing unit 140 which is installed on-board of the railway vehicle 1 and comprises a processor, or processor-based device or controller; the unit 140 can comprise any suitable type of commercially available processor or microprocessor suitably programmed or associated with software, and to the extent needed accompanied with suitable circuitry, for performing the functionalities it is used for, as it will become more apparent from the following description.

In particular, in the localizing system 100 according to the present invention, the unit 140 is conveniently associated with or comprises at least one software module, schematically represented in figure 1 by the reference number 170, for the scopes that will be described in more details hereinafter.

The localizing system 100 further comprises at least one sensor 110 which is installed on-board of the railway vehicle 1; while the railway vehicle 1 is travelling along the railway line 10, for example along the direction indicated in figure 2 by the arrow A, the at least one sensor 110 is configured to detect a first parameter related to the current-conducting wire 3 and then to provide to the control and processing unit 140, first signals S₁ indicative of the actual value of the first parameter detected.

Conveniently, the control and processing unit 140 is configured to calculate, based on the first signals S₁ received, a second parameter indicative of the possible presence of a cantilever pole 4 detected along the railway line 10.

Usefully, the localizing system 100 comprises also a plurality of devices 120 which are installed on board of the railway vehicle 1 and are arranged to provide to the control and processing unit 140, while the railway vehicle 1 is travelling, second signals S₂ suitable for identifying the cantilever pole 4 possibly detected, and the control and processing unit 140 is further configured to univocally identify the cantilever pole 4 whose presence has been detected based on the second signals S₂ and to calculate the actual position of the railway vehicle 1 along the railway line 10 based on the univocally identified catenary pole 4.

According to one embodiment, the at least one sensor 110 comprises one or more Hall-effect sensors, each arranged to sense the actual magnetic field around the current-conducting wire 3, and to provide to the control and processing unit 140 corresponding first signals S₁ indicative of the detected actual magnetic field around the current-conducting wire 3.

In particular, as schematically illustrated in figure 2, there are provided at least a first Hall-effect sensor 111 and a second Hall-effect sensor 112 which are mounted on the roof of the railway vehicle 1, spaced apart from each other, for example one towards the front part of the vehicle 1 and the other towards the back part thereof.

According to a possible embodiment, both the first Hall-effect sensor 111 and the second Hall-effect sensor 112 comprise each a respective array of Hall-effect sensors.

Accordingly, the control and processing unit 140 is configured to calculate, based on the first signals S₁ received indicative of the magnetic field around the current-conducting wire 3, the above mentioned second parameter indicative of the possible presence of a cantilever pole 4 detected along the railway line 10.

More in particular, the control and processing unit 140, based on the signal S₁ received indicative of the actual magnetic field, is configured to measure the horizontal stagger of the wire 3, and more precisely to measure the change of the trend in the stagger between two-time instances.

Indeed, the actual value of stagger can either continuously increase or decrease since, as schematically illustrated in figure 3, at each catenary pole 4 there is a deflection observed in the stagger, i.e. the stagger value changes from increasing to decreasing or vice versa.

Hence the inversion of the measured stagger values can be assumed as an indication of the possible presence of a cantilever pole 4 detected along the railway line 10.

This possible detection can be confirmed with the univocal identification of the subject catenary pole 4 and can be confirmed using the signals S₂ received from one or more of the plurality of devices 120, as it will described in more details hereinafter.

In details, according to an embodiment, the plurality of devices 120 comprises one or more GNSS ("Global Navigation Satellite System") receivers arranged to provide to the control and processing unit 140 second signals S₂ indicative of the possible actual positioning and/or of the actual speed of the railway vehicle 1.

As schematically illustrated in the exemplary embodiment of figure 2, there are provided at least a first GNSS receiver 121 and a second GNSS receiver 122 which are mounted on the roof of the railway vehicle 1, spaced apart from each other, for example one towards the front part and the other towards the back part of the vehicle 1 itself.

According to further possible embodiments, in the localizing system 100 according to the invention, the plurality of devices 120 further comprises one or more of:
- a pitot tube, schematically indicated in figures 1 and 2 by the reference number 123, which is mounted for example at a front part of the railway vehicle 1 and is arranged to provide to the control and processing unit 140 second signals S₂ indicative of the actual speed of the railway vehicle 1; and/or
- at least one multi-axis gyroscope, e.g. a three-axis gyroscope, schematically indicated in figures 1 and 2 by the reference number 124, which is also mounted on board of the railway vehicle 1 and is arranged to provide to the control and processing unit 140 second signals S₂ indicative of the actual rotational or angular movements of the railway vehicle 1. In particular, the gyroscope 124 is aimed at providing the control and processing unit 140 with signals S₂ indicative of track changeovers encountered by the railway vehicle 1 during its travel along the railway line 10, thus detecting for instance when the railway vehicle 1 has deviated from the previous direction due to the presence of points or changeovers along the line. Further, the signals S₂ provided by the gyroscope 124 can be used to correct the measurements of the actual stagger; and/or
- at least one multi-axis accelerometer, schematically indicated in figures 1 and 2 by the reference number 125, also mounted on board of the railway vehicle 1, which is arranged to provide to the control and processing unit 140 second signals S₂ indicative of the actual acceleration or actual deceleration of the railway vehicle 1.

The multi-axis gyroscope and the multi-axis accelerometer above mentioned can be constituted each by any commercially available MEMS sensor.

According to a possible embodiment, and as schematically illustrated in figure 1, the localizing system 100 further comprises one or more databases 150 which are installed on-board of the railway vehicle 1 and comprise data selected from the group comprising but not limited to: identification data related to a layout and/or parts or components of the railway line 10, such as predefined zones thereof, switch points or track changeovers; identification data (hereinafter ID) and absolute location data related to each of said cantilever poles 4, such as the kilometric location of each pole 4, ID and/or list of upcoming cantilever poles 4 along the railway line 10; data calculated based on one or more first and/or second signals S₁, S₂ provided by one or more of the plurality of devices 120 and/or the at least one sensor 110.

Clearly, some of the data can remain always the same, and/or can be entered by an operator, and some data can be related to actual calculations and therefore be updated.

According to a possible embodiment, and as schematically illustrated in figure 1, the one or more databases 150 include:
- a first repository 151, or track transition database, containing for example data related but not limited to: zone numbers of the various zones into which a railway line 10 can be segmented; interstation names/IDs, assigned by concatenating two station names or IDs; catenary pole identification numbers ("IDs") at which track changeover occurs and which is updated at least at each track change over; rotational angles detected via the gyroscope 124, first catenary pole ID after the track changeover. This database is in particular used to re-initialize the catenary pole ID at point or switches;
- a second repository 152, or catenary location database, containing for example data related but not limited to: zone numbers of the various zones into which a railway line 10 can be segmented; unique catenary pole identification numbers ("IDs"); absolute location kilometric point of each pole 4; identification numbers ("ID") for each track of the railway line 10; upcoming catenary pole ID; upcoming catenary pole in terms of incremental distance calculated by the accelerometer 125 and rotation angles detected via the gyroscope 124 where, as above indicated, a deviation on the left would have a +ve polarity, and a deviation on the right would have a -ve polarity, while the value for no deviation would be set as zero.

For example, the data contained in the second repository 152 would look like the following sequence: "zone number, catenary pole ID, track IDs, location kilometric point, list of upcoming catenary poles IDs, list of upcoming catenary poles (distance, angle), GNSS data (latitude, longitude).

For instance, such data would look like: "Zone1, 8/9, 1, 1550, 9/1|9/1B|9/1A, (50,0)|(20, +20)|(30,+20), (62° 31' 22.346" N, 16° 39' 32.191" E).

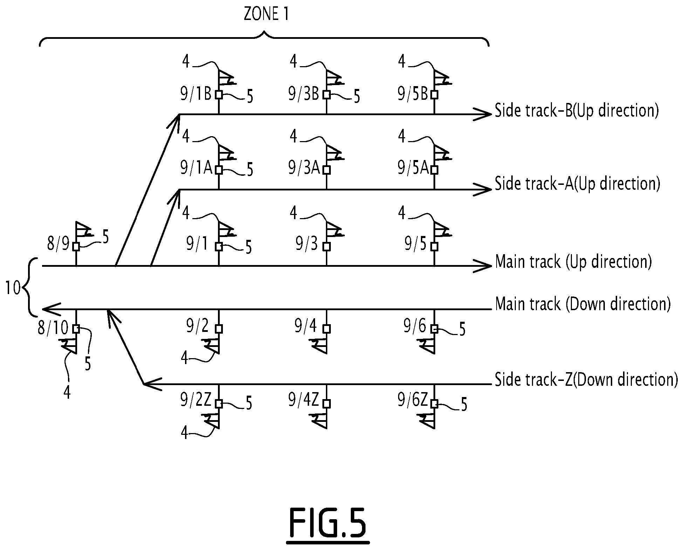

Thus, referring to the exemplary layout of figure 5, where poles 4 may carry also identifying plates 5, the direction UP would read "Zone1, 8/9, 1550, 9/1|9/1B|9/1A, (50,0)|(20, +20)|(30,+20), (62° 31' 22.346" N, 16° 39' 32.191" E)", where data 9/1A identifies that the relevant catenary pole 4 is located at the transition slow reduced speed track A; data 9/1B indicate that the relevant catenary pole 4 is located at the transition slow reduced speed track B; the plain indication 9/1 means that the catenary pole 4 is located at the transition mainline normal speed track, and does not have any suffix. In the examples illustrated, suffixes are added with the letters from A to M, A1 to M1, A2 to M2, et cetera, for the "up" direction.

In turn, for the opposite down direction, the corresponding sequence of data would look like: "Zone1, 8/10, 2, 1550, 9/2|9/2Z, (50,0)|(20, -20), (62° 31' 22.346" N, 16° 39' 32.191" E)".

Thus, still referring to the exemplary layout depicted in figure 5, data "9/2Z" indicate that the catenary pole 4 is located at the transition slow (reduced) speed track Z; for this direction, the suffixes are added with the letter from Z to N, Z1 to N1, Z2 to N2, etc. for "down" direction.

In the example illustrated, the repositories 151-152 have been illustrated as two separate databases; of course, they can be part of a same database or they can be merged/split in a number of databases different from that illustrated.

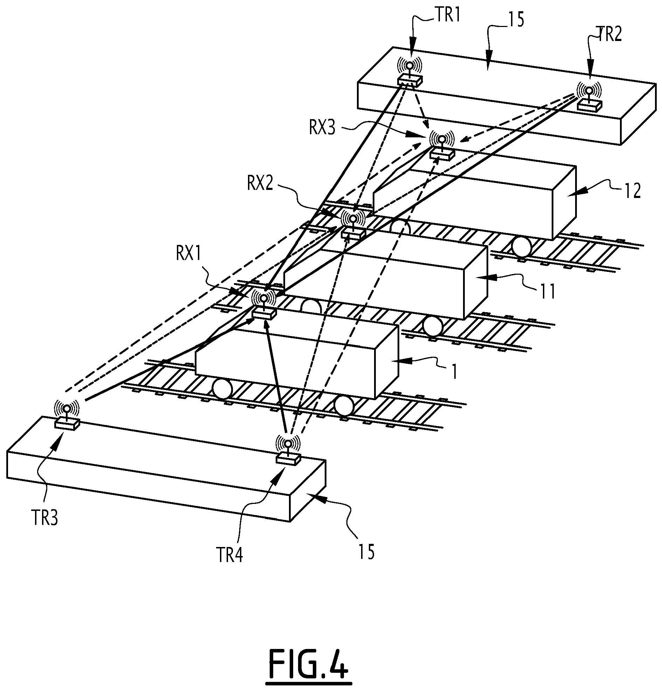

Conveniently, the localization system 100 according to the invention comprises also at least one initializing device, schematically indicated in figure 1 and 2 by the reference number 130, which is adapted to provide to the control and processing unit 140 third signals S₃ suitable for initializing the position of the railway vehicle 1 while the railway vehicle 1 is at an initial static position, i.e. at a station indicated schematically in figure 4 by the reference number 15.

In particular, as schematically illustrated in figure 2, the at least one initializing device 130 comprises a first VHF ("Very High Frequency") receiver 131 and a second VHF receiver 132 which are mounted on the roof of the railway vehicle 1, spaced apart from each other, for example one towards the front part and the other towards the back part of the vehicle 1 itself.

According to this embodiment, the localizing system 100 according to the invention comprises a further repository 153, or location augmentation database, which contains for example data related but not limited to: zone numbers of the various zones into which a railway line 10 can be segmented; station identification numbers, identifying the stations located along the railway line 10; track IDs, location kilometric point; angle of arrival at a static location, e.g. a station, relative to transmitters (for example transmitters TR1 to TR4 as schematically represented in figure 4) located at the same station; time to receive signals, measured in milliseconds ms (for example from TR1/4 to receivers RX1, RX2 and RX3).

The location augmentation database 153 can be installed for example on-board of a railway vehicle 1.

For example, the data contained in the third repository 153 would look like the following sequences:
"Zone1, Station-1, TX1, 10000, 10|50|10|60, 10|50|20|50";
"Zone1, Station-1, TX2, 10000, 30|10|70|20, 40|10|100|20".

Conveniently, as previously mentioned, the control and processing unit 140 comprises or it is associated to the at least one software module, schematically represented in figure 1 by the reference number 170, which is configured at least to carry out a validation check for confirming the presence of a catenary pole 4 detected based on the first signals S₁ received from the at least one sensor 110, namely the one or more Hall-effect sensors 111, 112, and on the second signals S₂ received ,from one or more of the plurality of devices 120, in particular the one or more GNSS receivers 121, 122.

Usefully, the at least one software module 170 is also configured to propagate the location of the railway vehicle 1 between catenary poles, i.e. the actual distance travelled from a catenary pole 4 before reaching the following pole 4, based on the signals S₂ received by one or more of the plurality of devices 120, and in particular on the data supplied by the accelerometer 125 relative to the actual acceleration or deceleration of the railway vehicle 1, on the signals S₂ received by the pitot tube 123, and on the signals S₂ provided by the GNSS receivers 121 and 122 indicative of the actual speed of the railway vehicle 1, while the signals S₂ from the multi-axis gyroscope 124 are also used to re-initialize the computation after a changeover or switch point.

As those skilled in the art would easily appreciate, the at least one software module 170 can be a single software including a certain number of algorithms, or it can comprise a plurality of distinct software modules each containing its own algorithms.

In particular, the at least one software module 170 can comprise or be composed by one or more Kalman filters, such as a Linear Kalman Filter (LKF), and/or an Extended Kalman Filter (EKF), and/or a Nearest Neighbour Kalman Filter (NNKF) which are based on a dynamic model or on a kinematic model of the railway vehicle 1. For example, the dynamic model is based on certain parameters of the vehicle 1, such as the mass, coupler dynamics, resistance dynamics, e.g. the propulsion resistance, gradient/curve resistance, et cetera. The kinematic model is based on a constant acceleration model. Hence, depending on the knowledge of the parameters of the vehicle 1 and/or the applications, either the dynamic model based Extended Kalman Filter or the kinematic model based Linear Kalman Filter can be chosen. Similarly, one of the models can be used in the Nearest Neighbour Kalman Filter (NNKF).

The localizing system 100 can also comprise a device 160, e.g. a transceiver, for communicating data on board of the railway vehicle itself, or outside, e.g. to a remote control center.

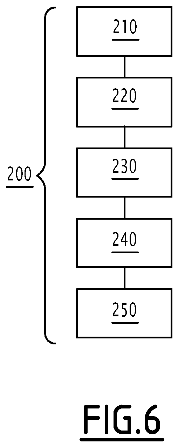

Figure 6 illustrates a method 200 for localizing a railway vehicle 1 traveling on a railway line 10 according to the present invention which can be carried out in connection with the system 100 and related components thereof, which comprises at least the following steps:
- 210: providing, to a control and processing unit, e.g. the unit 140 installed on-board of the railway vehicle 1, by means of at least one sensor 110 which is also installed on-board of the railway vehicle 1, first signals S₁ indicative of the actual value of a first parameter detected related to the current-conducting wire 3, while the railway vehicle 1 is travelling along the railway line 10;
- 220: calculating, by means of the control and processing unit 140, based on the first signals S₁ received, a second parameter indicative of a cantilever pole (4) possibly detected along the railway line (10);
- 230: providing, to said control and processing unit 140, by means of a plurality of devices 120 installed on board and while the railway vehicle 1 is travelling along the railway line 10, second signals S₂ suitable for identifying the cantilever pole 4 whose presence has been detected;
- 240: univocally identifying, by means of the control and processing unit 140, and based on the second signals S₂ received, the cantilever pole 4 whose presence has been detected; then
- 250: calculating the actual position of the railway vehicle 1 along the railway line 10 based on the univocally identified catenary pole 4.

As those skilled in the art would easily appreciate, some of the steps above described can be executed in a sequence different from the one above illustrated for the sake of description; for example, the steps 210 and 230 can be executed in parallel to each other.

The method 200 can carry in term of steps all functionalities performed by the system 100 which are hereby not replicated for the sake of conciseness, as it will become apparent also from the following example illustrating the functioning of the system 100 and method 200 for localizing the position of a railway vehicle along a railway line.

When a railway vehicle 1, such as a train, starts its travel from a station 15, the vehicle 1 is assigned with an initial zone number, track ID, kilometric location point, by using the VHF signals emitted by the transmitters TR1 to TR4 and received by the VHF receivers 131, 132 installed on board of the vehicle 1, as for example illustrated in figure 4. All VHF transmitters can be linked with a common GNSS receiver at the station for the proper time synchronization. As shown in figure 4, the static VHF transmitters (TR 1 to TR4) broadcast their time of transmission, ID and location continuously towards the trains 1, 11 and 12 stopped at platforms. The information relative to the location of a VHF transmitter can be similar to the format of latitude/longitude of GNSS devices or in the form of coordinates (x, y, z). For the exemplary scenario of three trains 1, 11 and 12 standing at the station 15, each corresponding VHF receiver RX1, RX2 RX3 receives the signals from the transmitters TR1 to TR4. In figure 4, the second VHF receiver 132 mounted for example at the back part of each train 1, 11 and 12 is omitted simply for the sake of ease of illustration. Depending on the angle of arrival or time difference between arrival and reception, the track ID, and train location is initialized for each train using for example also location augmentation database 153. Then, for each train, such as the vehicle 1, the software module 170 or any part thereof, e.g. the linear Kalman filter (LKF) and/or the extended Kalman filter (EKF) contains the actual states such as the distance from the station 15, the speed and acceleration of the vehicle 1, which are initialized as zero at the station 15. Initially, the SW module 170, namely the relevant filter LKF or EKF, uses the measurements of the accelerometer 125 for computing the propagation of the distance, assuming for example that the measurements from the GNSS receivers 121 and 122 related to speed are not yet available and that the measurements from the Pitot tube 123 can be usable only after the railway vehicle 1 has achieved a certain speed, e.g. 60 km/h. The constant acceleration model can be used to propagate the states from one instant to another instant, e.g. for a typical time of 100 ms. Once measurements from the GNSS receivers 121 and 122 are available, they can be used for the speed calculation by the difference between two successive time intervals. Further, once the measurements from the Pitot tube 123 are also available after the vehicle 1 has reached the speed of 60 km/h, then the module 170 can fuse all the measurements, for example via a probabilistic fuser. During the travel, as previously described, the magnetic field around the wire 3 is detected by the Hall-effect sensors 111 and 112 and corresponding signals S₁ are sent to the control and processing unit 140 for further processing. As previously described, based on the first signals S₁ received, the unit 140 computes the actual horizontal stagger of the wire 3 thus identifying a change in the trend thereof, namely when the actual stagger passes from increasing to decreasing of vice versa, which change is indicative of the possible presence of a catenary pole 4. Hence, once such inversion change of the stagger is confirmed, the presence of a catenary pole is detected; and the unit 140 samples the data supplied by the GNSS receivers 121 and 122 via the respective signals S₂ in order to identify univocally the identity of the catenary pole 4 whose presence has been detected. In more details, the software module 170 and in particular the nearest neighbour Kaman filter (NNKF) draws a circular identification gate region based for instance on the catenary pole location as the center and the fixed variance of the GNSS receivers 121/122 as the radius. If the measurement from the GNSS receivers falls outside the identification gate, it is rejected as a false signal. If the measurement lies inside the identification gate, it is treated as the valid catenary pole 4. This way cantilever is identified without ambiguity for appropriate localization. Accordingly, using for example the location predicted by the LKF or the EKF, the current zone number, the track ID, the GNSS data, the specific catenary pole 4 is reliably and univocally identified in the catenary location database 152 and the unit 140 can calculate precisely and confirm the location of the vehicle 1 along the line 10 in relation to the univocally identified catenary pole 4. In particular, the unit 140 extracts the catenary pole 4 information from the "catenary pole database" 152 using for example the pair of data zone number and catenary pole ID. The vehicle 1 is assigned with the relevant zone number, the catenary pole ID, the track ID, the location (kilometric point) as the actual localization. Then, the unit 140 predicts the next catenary pole number using the "list of upcoming catenary pole IDs" and the "list of the upcoming catenary pole distance, angle" from the same database. Since the various measurements are available at the catenary pole location, the unit 140 inputs the speed/acceleration data received from the accelerometer 125, the pitot tube 123, and the GNSS receivers 121 and 122, to the software module 170 or any relevant part thereof, e.g. to the LKF/EKF to reset the incremental distance state. The previous estimated or initialized speed and acceleration data are kept as they are in the LKF/EKF. The updated estimates are sent continuously to the unit 140. Based on the available information on zone number, catenary pole ID identified, track ID, kilometric point, the unit 140 predicts the expected next catenary pole 4 location using the actual 'incremental distance' of the LKF/EKF. At the appropriate incremental distance, it triggers the GNSS receivers 121 and 122 to provide the measurement data. The step during which the unit 140 inputs the actual speed/acceleration data received from the accelerometer 125, the pitot tube 123, and the GNSS receivers 121 and 122, to the software module 170 or any relevant part thereof, e.g. to the LKF/EKF, to reset the incremental distance state is repeated until a new catenary pole 4 is univocally identified, via the validation check previously described. In addition, during the travel, the unit 140 predicts the possible presence of track changeovers which can occur using the data stored in the "catenary location database" and the signals S₂ received from the gyroscope 124 which detects angular/rotational movements of the vehicle 1. The track changeover is identified in particular using the data from the gyroscope 124 and the track transition database 151, and the first catenary pole ID after the track changeover is reinitialized and the above steps for localizing the position of the vehicle 1 are repeated.

Usefully, according to an embodiment, the various parts and components of the localizing system 100, apart from the further repository 153, or location augmentation database, are suitably and completely installed on-board of a railway vehicle 1, which is therefore capable of autonomously self-locating its position along a railway line over which it is travelling.

Hence, it is evident from the foregoing description and appended claims that the localizing system 100, the method 200, and the related railway vehicle 1 according to the present invention, achieve the intended aims and objects, since they allow to localize precisely and timely the position of a railway vehicle travelling along a railway line, even completely autonomously by the railway vehicle 1 itself.

These results are obtained by exploiting components, such as the catenary poles, already installed along a railway line 10 and normally used for other purposes, thus avoiding using ad hoc additional equipment mounted along the railway line; in this way, the catenary poles 4 constitute a kind of virtual balises, thus rendering the presence of physical balises along the line 10 not necessary for the scope of localization.

Further, according to the present invention, the negative influence of operative and/or environmental conditions, such as the presence of snow, darkness, et cetera, is substantially mitigated, if not completely eliminated, and the system is robust enough to work properly also when, for whatever reason, one or more of the data/signals are momentarily not allowable. For example, if data from the GNSS receivers 121 and 122 are not available, e.g. in tunnels, signal outage areas, the identification of the catenary pole 4 is possible using the pair of Hall-effect sensors 111, 112 and the incremental distance calculation can be performed based on the previous kilometric point of the catenary pole and the signals S₂ from the accelerometer 125 and/or the Pitot tube 123; if the data from the Hall-effect sensors 111, 112 are not available, e.g. when there is an isolation area, the identification of the catenary pole 4 is still possible based on the signals from the pair of GNSS receivers 121 and 122, and the incremental distance calculation performed based on the previous kilometric point of the catenary pole 4 and the signals S₂ from the accelerometer 125 and/or the Pitot tube 123 and the GNSS receivers. If data from the accelerometer 125 data are not available, then the EKF still provides the vehicle's model-based propagated states such as the distance, speed, and acceleration. Also, the distance can be measured using the speed data which is estimated using data from the Pitot tube 123 and the GNSS based speed measurements by using two-time instances measurements. If only data from the Pitot tube 123 are available, the EKF still provides the vehicle's model-based propagated states, such as the distance, speed, and acceleration. Also, the distance can be measured using the speed data which is estimated using the speed measurements of the pitot tube. If only data from the accelerometer 125 are available, then the EKF still provides the estimated states such as the distance, speed, and acceleration using accelerometer alone. Since in such instance there could not be a reset of the incremental distance calculated, then the estimates will be the cumulative distance from the available location data. With the help of a gyroscope, the vehicle 1 will be able to know the approximate location of the catenary pole 4 based on the information linked with the "catenary location database" 152. Even if all data from the sensors 110 and the plurality of devices 120 are not available, the EKF module can still provide the vehicle's model-based propagated states such as distance, speed, and acceleration. The incremental distance will be accumulated until the availability of the next measurement.

The system 100, method 200, and railway vehicle 1 thus conceived are susceptible of modifications and variations, all of which are within the scope of the invention as defined by the appended claims; for example, some parts of the localizing system 100 may reside on the same electronic unit, or they can even be realized as subparts of a same component or circuit of an electronic unit, or they can be placed remotely from each other and in operative communication there between.

## Claims

1. A system (100) for localizing a railway vehicle (1) travelling on a railway line (10) which is powered by a catenary line (2) comprising a current-conducting wire (3) supported by a plurality of spaced apart catenary poles (4), the system (100) being **characterized in that** it comprises at least:
- a control and processing unit (140) installed on-board of the railway vehicle (1);
- at least one sensor (110) which is installed on-board of the railway vehicle (1) and is configured to provide to the control and processing unit (140), while the railway vehicle (1) is travelling along the railway line (10), first signals (S₁) indicative of the actual value of a first parameter detected related to said current-conducting wire (3), wherein the control and processing unit (140) is configured to calculate, based on the first signals (S₁) received, a second parameter indicative of a catenary pole (4) possibly detected along the railway line (10);
- a plurality of devices (120) which are installed on board of the railway vehicle (1) and are suitable to provide to the control and processing unit (140) second signals (S₂) suitable for identifying the catenary pole (4) possibly detected; and wherein the control and processing unit (140) is further configured to univocally identify the catenary pole (4) possibly detected based on the second signals (S₂) and to calculate the actual position of the railway vehicle (1) along the railway line (10) based on the univocally identified catenary pole (4), **characterized in that** said plurality of devices (120) comprises a pitot tube (123) arranged to provide to the control and processing unit (140) second signals (S₂) indicative of the actual speed of the railway vehicle (1).

2. A system (100) as in claim 1, wherein said at least one sensor (110) comprises one or more Hall-effect sensors (111, 112) which are arranged each to detect the actual magnetic field around the current-conducting wire (3) and to provide to the control and processing unit (140) first signals (S₁) indicative of the actual magnetic field detected.

3. A system (100) as in claim 1 or 2, wherein said plurality of devices (120) comprises one or more GNSS receivers (121, 122) arranged to provide to the control and processing unit (140) second signals (S₂) indicative of the possible actual positioning and/or of the actual speed of the railway vehicle (1).

4. A system (100) as in any one of the preceding claims, wherein said plurality of devices (120) comprises at least one multi-axis gyroscope (124) arranged to provide to the control and processing unit (140) second signals (S₂) indicative of the actual rotational or angular movements of the railway vehicle (1).

5. A system (100) as in any one of the preceding claims, wherein said plurality of devices (120) comprises at least one multi-axis accelerometer (125) arranged to provide to the control and processing unit (140) second signals (S₂) indicative of the actual acceleration or deceleration of the railway vehicle (1).

6. A system (100) as in any one of the preceding claims, wherein it further comprises one or more databases (150) which are installed on board of the railway vehicle and comprise data selected from the group comprising identification data related to a layout and/or parts or components of the railway line (10), identification data and absolute location data related to each of said catenary poles (4), data calculated based on one or more second signals (S₂) provided by one or more of the plurality of devices (120).

7. A system (100) as in any one of the preceding claims, wherein the control and processing unit (140) comprises or it is associated to at least one software module (170) which is configured at least to carry out a validation check for confirming the presence of a catenary pole (4) detected based on the first signals (S₁) received from the at least one sensor (110) and on one or more second signals (S₂) received from one or more of the plurality of devices (120).

8. A system (100) as in any one of the preceding claims, wherein it further comprises at least one initializing device (130) adapted to provide to the control and processing unit (140) third signals (S₃) suitable for initializing the position of the railway vehicle (10) while the railway vehicle (10) is at an initial static position (15).

9. A railway vehicle (10) **characterized in that** it comprises, or it is adapted to interact with, a localizing system (100) as in claim 1.

10. A method (200) for localizing a railway vehicle (1) travelling on a railway line (10) which is powered by a catenary line (2) comprising a current-conducting wire (3) supported by a plurality of spaced apart catenary poles (4), the method (200) being comprising at least the following steps:
- (210): providing, to a control and processing unit (140) installed on-board of the railway vehicle (1), by means of at least one sensor (110) which is installed on-board of the railway vehicle (1), first signals (S₁) indicative of the actual value of a first parameter detected related to the current-conducting wire (3), while the railway vehicle (1) is travelling along the railway line (10);
- (220): calculating, by means of said control and processing unit (140), based on the first signals (S₁) received, a second parameter indicative of a cantilever pole (4) possibly detected along the railway line (10); the method being **characterized in that** it further comprises:
- (230): providing, to said control and processing unit (140), by means of a plurality of devices (120) installed on-board of the railway vehicle (1) and while the railway vehicle (1) is travelling along the railway line (10), second signals (S₂) suitable for identifying the catenary pole (4) whose possible presence has been detected, wherein said plurality of devices (120) comprises a pitot tube (123) providing the control and processing unit (140) with second signals (S₂) indicative of the actual speed of the railway vehicle (1);
- (240): univocally identifying, by means of the control and processing unit (140), based on the second signals (S₂) received, the catenary pole (4) whose possible presence has been detected; then
- (250): calculating the actual position of the railway vehicle (1) along the railway line (10) based on the univocally identified catenary pole (4).

## Patentansprüche

1. System (100) zum Lokalisieren eines Schienenfahrzeugs (1), welches sich auf einer Bahnstrecke (10) bewegt, welche durch eine Oberleitung (2) mit Strom versorgt wird, die einen stromführenden Draht (3) umfasst, welcher durch eine Mehrzahl von voneinander beabstandeten Oberleitungsmasten (4) gehaltert ist, wobei das System (100) **dadurch gekennzeichnet ist, dass** es wenigstens umfasst:
- eine Steuer- und Verarbeitungseinheit (140), welche an Bord des Schienenfahrzeugs (1) installiert ist;
- wenigstens einen Sensor (110), welcher an Bord des Schienenfahrzeugs (1) installiert ist und dazu eingerichtet ist, der Steuer- und Verarbeitungseinheit (140), während sich das Schienenfahrzeug (1) entlang der Bahnstrecke (10) bewegt, erste Signale (S₁) bereitzustellen, welche für den tatsächlichen Wert eines in Bezug auf den stromführenden Draht (3) detektierten ersten Parameters indikativ sind, wobei die Steuer- und Verarbeitungseinheit (140) dazu eingerichtet ist, auf Grundlage der empfangenen ersten Signale (S₁) einen zweiten Parameter zu berechnen, welcher für einen möglicherweise entlang der Bahnstrecke (10) detektierten Oberleitungsmast (4) indikativ ist;
- eine Mehrzahl von Vorrichtungen (120), welche an Bord des Schienenfahrzeugs (1) installiert sind und dafür geeignet sind, der Steuer- und Verarbeitungseinheit (140) zweite Signale (S₂) bereitzustellen, welche zum Identifizieren des möglicherweise detektierten Oberleitungsmasts (4) geeignet sind; und wobei die Steuer- und Verarbeitungseinheit (140) ferner dazu eingerichtet ist, auf Grundlage der zweiten Signale (S₂) den möglicherweise detektierten Oberleitungsmast (4) eindeutig zu identifizieren und auf Grundlage des eindeutig identifizierten Oberleitungsmasts (4) die tatsächliche Position des Schienenfahrzeugs (1) entlang der Bahnstrecke (10) zu berechnen, **dadurch gekennzeichnet, dass** die Mehrzahl von Vorrichtungen (120) ein Pitot-Rohr (123) umfasst, welches dazu eingerichtet ist, der Steuer- und Verarbeitungseinheit (140) zweite Signale (S₂) bereitzustellen, welche für die tatsächliche Geschwindigkeit des Schienenfahrzeugs (1) indikativ sind.

2. System (100) nach Anspruch 1, wobei der wenigstens eine Sensor (110) einen oder mehrere Hall-Effekt-Sensoren (111, 112) umfasst, welche jeweils dazu eingerichtet sind, das tatsächliche Magnetfeld um den stromführenden Draht (3) herum zu detektieren und der Steuer- und Verarbeitungseinheit (140) erste Signale (S₁) bereitzustellen, welche für das detektierte tatsächliche Magnetfeld indikativ sind.

3. System (100) nach Anspruch 1 oder 2, wobei die Mehrzahl von Vorrichtungen (120) einen oder mehrere GNSS-Empfänger (121, 122) umfasst, welche dazu eingerichtet sind, der Steuer- und Verarbeitungseinheit (140) zweite Signale (S₂) bereitzustellen, welche für die mögliche tatsächliche Positionierung und/oder die tatsächliche Geschwindigkeit des Schienenfahrzeugs (1) indikativ sind.

4. System (100) nach einem der vorhergehenden Ansprüche, wobei die Mehrzahl von Vorrichtungen (120) wenigstens ein mehrachsiges Gyroskop (124) umfasst, welches dazu eingerichtet ist, der Steuer- und Verarbeitungseinheit (140) zweite Signale (S₂) bereitzustellen, welche für die tatsächlichen Dreh- oder Winkelbewegungen des Schienenfahrzeugs (1) indikativ sind.

5. System (100) nach einem der vorhergehenden Ansprüche, wobei die Mehrzahl von Vorrichtungen (120) wenigstens einen mehrachsigen Beschleunigungsmesser (125) umfasst, welcher dazu eingerichtet ist, der Steuer- und Verarbeitungseinheit (140) zweite Signale (S₂) bereitzustellen, welche für die tatsächliche Beschleunigung oder Verzögerung des Schienenfahrzeugs (1) indikativ sind.

6. System (100) nach einem der vorhergehenden Ansprüche, wobei es ferner eine oder mehrere Datenbanken (150) umfasst, welche an Bord des Schienenfahrzeugs installiert sind und Daten umfassen, die aus der Gruppe ausgewählt sind, umfassend Identifikationsdaten in Bezug auf ein Layout und/oder Teile oder Komponenten der Bahnstrecke (10), Identifikationsdaten und absolute Standortdaten in Bezug auf jeden der Oberleitungsmasten (4), Daten, welche auf Grundlage eines oder mehrerer zweiter Signale (S₂) berechnet werden, die durch eine oder mehrere der Mehrzahl von Vorrichtungen (120) bereitgestellt werden.

7. System (100) nach einem der vorhergehenden Ansprüche, wobei die Steuer- und Verarbeitungseinheit (140) wenigstens ein Softwaremodul (170) umfasst oder einem solchen zugeordnet ist, welches dazu eingerichtet ist, wenigstens eine Validierungsprüfung zum Bestätigen des Vorhandenseins eines Oberleitungsmasts (4) auszuführen, welcher auf Grundlage der von dem wenigstens einen Sensor (110) empfangenen ersten Signale (S₁) und eines oder mehrerer von einer oder mehreren der Mehrzahl von Vorrichtungen (120) empfangener zweiter Signale (S₂) detektiert worden ist.

8. System (100) nach einem der vorhergehenden Ansprüche, wobei es ferner wenigstens eine Initialisierungsvorrichtung (130) umfasst, welche dafür ausgelegt ist, der Steuer- und Verarbeitungseinheit (140) dritte Signale (S₃) bereitzustellen, die zum Initialisieren der Position des Schienenfahrzeugs (10) geeignet sind, während sich das Schienenfahrzeug (10) in einer anfänglichen statischen Position (15) befindet.

9. Schienenfahrzeug (10), **dadurch gekennzeichnet, dass** es ein Lokalisierungssystem (100) nach Anspruch 1 umfasst oder dazu eingerichtet ist, mit einem solchen zu interagieren.

10. Verfahren (200) zum Lokalisieren eines Schienenfahrzeugs (1), welches sich auf einer Bahnstrecke (10) bewegt, welche durch eine Oberleitung (2) mit Strom versorgt wird, die einen stromführenden Draht (3) umfasst, welcher durch eine Mehrzahl von voneinander beabstandeten Oberleitungsmasten (4) gehaltert ist, wobei das Verfahren (200) **dadurch gekennzeichnet ist, dass** es wenigstens die folgenden Schritte umfasst:
- (210): Bereitstellen, für eine Steuer- und Verarbeitungseinheit (140), welche an Bord des Schienenfahrzeugs (1) installiert ist, mittels wenigstens eines Sensors (110), welcher an Bord des Schienenfahrzeugs (1) installiert ist, erster Signale (S₁), welche für den tatsächlichen Wert eines in Bezug auf den stromführenden Draht (3) detektierten ersten Parameters indikativ sind, während sich das Schienenfahrzeug (1) entlang der Bahnstrecke (10) bewegt;
- (220): Berechnen, mittels der Steuer- und Verarbeitungseinheit (140), auf Grundlage der empfangenen ersten Signale (S₁), eines zweiten Parameters, welcher für einen möglicherweise entlang der Bahnstrecke (10) detektierten Auslegermast (4) indikativ ist; wobei das Verfahren **dadurch gekennzeichnet ist, dass** es ferner umfasst:
- (230): Bereitstellen, für die Steuer- und Verarbeitungseinheit (140), mittels einer Mehrzahl von Vorrichtungen (120), welche an Bord des Schienenfahrzeugs (1) installiert sind, und während sich das Schienenfahrzeug (1) entlang der Bahnstrecke (10) bewegt, zweiter Signale (S₂), welche dafür geeignet sind, den Oberleitungsmast (4) zu identifizieren, dessen mögliche Anwesenheit detektiert worden ist, wobei die Mehrzahl von Vorrichtungen (120) ein Pitot-Rohr (123) umfasst, welches der Steuer- und Verarbeitungseinheit (140) zweite Signale (S₂) bereitstellt, welche für die tatsächliche Geschwindigkeit des Schienenfahrzeugs (1) indikativ sind;
- (240): eindeutig Identifizieren, mittels der Steuer- und Verarbeitungseinheit (140), auf Grundlage der empfangenen zweiten Signale (S₂), des Oberleitungsmasts (4), dessen mögliche Anwesenheit detektiert worden ist; dann
- (250): Berechnen der tatsächlichen Position des Schienenfahrzeugs (1) entlang der Bahnstrecke (10) auf Grundlage des eindeutig identifizierten Oberleitungsmasts (4).

## Revendications

1. Système (100) de localisation d'un véhicule ferroviaire (1) circulant sur une ligne ferroviaire (10) qui est alimenté par une ligne caténaire (2) comprenant un fil conducteur de courant (3) supporté par une pluralité de poteaux caténaires (4) espacés, le système (100) étant **caractérisé en ce qu'**il comprend au moins :
- une unité de commande et de traitement (140) installée à bord du véhicule ferroviaire (1) ;
- au moins un capteur (110) qui est installé à bord du véhicule ferroviaire (1) et est configuré pour émettre à l'unité de commande et de traitement (140), pendant que le véhicule ferroviaire (1) circule le long de la ligne ferroviaire (10), des premiers signaux (S₁) indicatifs de la valeur réelle d'un premier paramètre détecté lié audit fil conducteur de courant (3), l'unité de commande et de traitement (140) étant configurée pour calculer, sur la base des premiers signaux (S₁) reçus, un second paramètre indicatif d'un poteau caténaire (4) éventuellement détecté le long de la ligne ferroviaire (10) ;
- une pluralité de dispositifs (120) qui sont installés à bord du véhicule ferroviaire (1) et qui sont adaptés pour émettre à l'unité de commande et de traitement (140) des deuxièmes signaux (S₂) adaptés pour identifier le poteau caténaire (4) éventuellement détecté ; et dans lequel l'unité de commande et de traitement (140) est en outre configurée pour identifier de manière univoque le poteau caténaire (4) éventuellement détecté sur la base des deuxièmes signaux (S₂) et pour calculer la position réelle du véhicule ferroviaire (1) le long de la ligne ferroviaire (10) sur la base du poteau caténaire (4) identifié de manière univoque, **caractérisé en ce que** ladite pluralité de dispositifs (120) comprend un tube de Pitot (123) conçu pour émettre à l'unité de commande et de traitement (140) des deuxièmes signaux (S₂) indicatifs de la vitesse réelle du véhicule ferroviaire (1).

2. Système (100) selon la revendication 1, dans lequel le ou les capteurs (110) comprennent un ou plusieurs capteurs à effet Hall (111, 112) qui sont conçus chacun pour détecter le champ magnétique réel autour du fil conducteur de courant (3) et pour émettre à l'unité de commande et de traitement (140) des premiers signaux (S₁) indicatifs du champ magnétique réel détecté.

3. Système (100) selon la revendication 1 ou 2, dans lequel ladite pluralité de dispositifs (120) comprend un ou plusieurs récepteurs GNSS (121, 122) conçus pour émettre à l'unité de commande et de traitement (140) des deuxièmes signaux (S₂) indicatifs du positionnement réel possible et/ou de la vitesse réelle du véhicule ferroviaire (1).

4. Système (100) selon l'une quelconque des revendications précédentes, dans lequel ladite pluralité de dispositifs (120) comprend au moins un gyroscope multi-axes (124) conçu pour émettre à l'unité de commande et de traitement (140) des deuxièmes signaux (S₂) indicatifs des mouvements de rotation ou angulaires réels du véhicule ferroviaire (1).

5. Système (100) selon l'une quelconque des revendications précédentes, dans lequel ladite pluralité de dispositifs (120) comprend au moins un accéléromètre multi-axes (125) conçu pour émettre à l'unité de commande et de traitement (140) des deuxièmes signaux (S₂) indicatifs de l'accélération ou de la décélération réelle du véhicule ferroviaire (1).

6. Système (100) selon l'une quelconque des revendications précédentes, dans lequel il comprend en outre une ou plusieurs bases de données (150) qui sont installées à bord du véhicule ferroviaire et comprennent des données sélectionnées dans le groupe comprenant des données d'identification liées à un agencement et/ou des parties ou composants de la ligne ferroviaire (10), des données d'identification et des données de localisation absolue liées à chacun desdits poteaux caténaires (4), des données calculées sur la base d'un ou plusieurs deuxièmes signaux (S₂) émis par un ou plusieurs de la pluralité de dispositifs (120).

7. Système (100) selon l'une quelconque des revendications précédentes, dans lequel l'unité de commande et de traitement (140) comprend ou est associée à au moins un module logiciel (170) qui est configuré au moins pour effectuer une vérification de validation afin de confirmer la présence d'un poteau caténaire (4) détecté sur la base des premiers signaux (S₁) reçus de l'au moins un capteur (110) et sur la base d'un ou plusieurs deuxièmes signaux (S₂) reçus d'un ou plusieurs de la pluralité de dispositifs (120).

8. Système (100) selon l'une quelconque des revendications précédentes, dans lequel il comprend en outre au moins un dispositif d'initialisation (130) adapté pour émettre à l'unité de commande et de traitement (140) des troisièmes signaux (S₃) adaptés pour initialiser la position du véhicule ferroviaire (10) tandis que le véhicule ferroviaire (10) est à une position statique initiale (15).

9. Véhicule ferroviaire (10) **caractérisé en ce qu'**il comprend, ou est adapté pour interagir avec, un système de localisation (100) selon la revendication 1.

10. Procédé (200) de localisation d'un véhicule ferroviaire (1) circulant sur une ligne ferroviaire (10) qui est alimenté par une ligne caténaire (2) comprenant un fil conducteur de courant (3) supporté par une pluralité de poteaux caténaires (4) espacés, le procédé (200) comprenant au moins les étapes suivantes :
- (210) : l'émission, à une unité de commande et de traitement (140) installée à bord du véhicule ferroviaire (1), par le biais d'au moins un capteur (110) qui est installé à bord du véhicule ferroviaire (1), des premiers signaux (S₁) indicatifs de la valeur réelle d'un premier paramètre détecté lié au fil conducteur de courant (3), tandis que le véhicule ferroviaire (1) circule le long de la ligne ferroviaire (10) ;
- (220) : le calcul, au moyen de ladite unité de commande et de traitement (140), sur la base des premiers signaux (S₁) reçus, d'un second paramètre indicatif d'un poteau cantilever (4) éventuellement détecté le long de la ligne ferroviaire (10) ; le procédé étant **caractérisé en ce qu'**il comprend en outre :
- (230) : l'émission, à ladite unité de commande et de traitement (140), au moyen d'une pluralité de dispositifs (120) installés à bord du véhicule ferroviaire (1) et pendant que le véhicule ferroviaire (1) circule le long de la ligne ferroviaire (10), de deuxièmes signaux (S₂) adaptés pour identifier le poteau caténaire (4) dont la présence possible a été détectée, dans lequel ladite pluralité de dispositifs (120) comprend un tube de Pitot (123) émettant à l'unité de commande et de traitement (140) des deuxièmes signaux (S₂) indicatifs de la vitesse réelle du véhicule ferroviaire (1) ;
- (240) : l'identification de manière univoque, par le biais de l'unité de commande et de traitement (140), en fonction des deuxièmes signaux (S₂) reçus, du poteau caténaire (4) dont l'éventuelle présence a été détectée ; puis
- (250) : le calcul de la position réelle du véhicule ferroviaire (1) le long de la ligne ferroviaire (10) sur la base du poteau caténaire (4) identifié de manière univoque.
